# EUROPEAN PATENT APPLICATION

(11) **EP 1 811 286 A2**
(43) Date of publication of application: **25.07.2007**
(21) Application number: 07000370.2
(22) Date of filing: 09.01.2007
(51) Int. Cl.: G01N 21/35

(54) **Gas sensor and method for the production thereof**

(30) Priority: 19.01.2006 DE 102006002870
(71) Applicant: Tyco Electronics Raychem GmbH, 85521 Ottobrunn (DE)
(72) Inventor: Frodl, Robert, 81825 München (DE); Minuth, Rudi, 85354 Freising (DE); Mählich, Reinhold, 80995 München (DE); Fischer, Jörg, 81667 München (DE); Fehlberg, Simone, 80538 München (DE); Nothelfer, Rainer, 82110 Germering (DE); Straub, Kuno, 85356 Freising (DE)
(74) Representative: Grünecker, Kinkeldey, Stockmair & Schwanhäusser Anwaltssozietät

(57) **Abstract**

The present invention relates to a gas sensor, comprising a light source (4) introduced into a base (8), a detector (6) detecting the intensity of the light source (4) and a reflector (2a) associated with the light source (4), and to a method for the production of such a gas sensor. The problem underlying the invention, which is that of providing a gas sensor with high measuring accuracy, is solved according to the invention by providing a means (20) for play-free and immobile fixing of a lamp body (10) of the light source (4). The problem underlying the invention with regard to method, which is that of providing a method for the low-cost production of a gas sensor, is solved according to the invention by introduction of the light source (4) with interposition of a liquid agent (28) between the light source (4) and the base (8) and solidification of the liquid agent (28) to form a means (20) which is ultimately solid, whereby a gas sensor is produced in which the lamp body (10) of the light source (4) is fixed in play-free and immobile manner in the solid means (20).

## Description

The present invention relates to a gas sensor, comprising a light source inserted in a base, a detector detecting the intensity of the light source and a reflector associated with the light source, and to a method for the production of such a gas sensor.

A gas sensor of the above type makes use of the selective absorption of infrared radiation by gases. Known gas sensors which use infrared absorption comprise a radiation source, a measuring chamber, and a detector. Inside the measuring chamber, certain radiation wavelengths are absorbed by a gas to be detected. The gas selectivity of a gas sensor may be produced, for example, by a radiation source which emits light only in a wavelength range which is absorbed by the gas to be detected. Alternatively, an interference filter may be arranged in the measuring chamber, for example, which transmits in the wavelength range which is absorbed by the gas to be detected. The absorption results in a reduction in the radiation intensity which is detected by the detector. This change in intensity may be described by the so-called Lambert-Beer law. The intensity detected by the detector is thus a measure of the concentration of the gas.

A gas sensor of the above type is known from DE 103 19 186 A1. The gas sensor for a vehicle air conditioning system known from this prior art has an infrared radiation source, which comprises an incandescent bulb and a reflector, wherein the incandescent bulb is arranged at the focal point of the reflector. In order to achieve high measuring accuracy, the generic prior art proposes to separate both the radiation source and the detector from the measuring chamber in each case by a film which allows through only a wavelength range of relevance to measurement. In this way, it is also intended to prevent soiling of the optical components. However, the arrangement of these films results in a complex structure for the gas sensor housing. Thus, the provision of such a gas sensor is not only very complicated but also expensive. In addition, it has become apparent in practice that satisfactory measuring accuracy cannot be ensured despite this complex and time-consuming generic gas sensor structure. This is true in particular in the case of vibration loads during operation of the motor vehicle.

It is thus an object of the present invention to provide a low-cost gas sensor which exhibits high measuring accuracy and a simple structure. In addition, it is an object of the present invention to provide a method for the low-cost production of such a gas sensor.

The objects underlying the invention are achieved according to the invention respectively by a gas sensor having the features of claim 1 and a method for the production of a gas sensor having the features of claim 11.

The gas sensor according to the invention is characterised by a means for play-free and immobile fixing of a lamp body of the light source.

For the purposes of the invention, the lamp body of the light source is that component which separates the radiation-emitting element of the light source from the surrounding environment. In the case of an incandescent bulb, the lamp body is thus the glass envelope which separates a wire filament, which constitutes the radiation-emitting element, from the surrounding environment. In the case of a light-emitting diode, the lamp body feature according to the invention corresponds to the transparent plastic sheath of the light-emitting diode. It is assumed that the radiation-emitting element, i.e. the wire filament for example, is connected firmly to the lamp body.

The precise arrangement of the lamp body in relation to an associated reflector is of great significance when it comes to achieving high measuring accuracy. To this end, it is particularly important to position the lamp body at the focal point of the associated reflector. The means for play-free and immobile fixing of the lamp body ensures that the lamp body is not moved out of the focal point position under vibration loads. In particular, it is ensured that the lamp body is arranged in play-free and immobile manner relative to the base. Thus, the lamp body does not move relative to the base. For the purposes of the invention, play-free and immobile means that the lamp body cannot be deflected transversely or lengthwise of its longitudinal axis, which extends through the focal point. Practical experiments have demonstrated that even very slight deflection of the lamp body has a considerable influence on the measuring accuracy of a gas sensor. This fact has not hitherto been taken into account in the prior art. Thus, the gas sensor according to the invention makes high measuring accuracy possible even under vibration loads. The means may be constructed, for example, from a plurality of elements spaced from one another in the circumferential direction of the lamp body, said elements lying against the circumferential surface of the lamp body. Thus, the means may consist of a plurality of elements and is not restricted to a component of one-piece construction.

Preferably, the means only lies against a lower portion of the circumferential surface of the lamp body. The lower portion is that portion which is adjacent the base.

For the purposes of the invention, the base may take the form, for example, of a component designed for mounting on a printed circuit board. However, the base may also be formed by the printed circuit board per se, for example as a receptacle integrated into the printed circuit board or as a hole formed in the printed circuit board, into which the light source is introduced.

According to an embodiment of the present invention, the means is formed by solidification of an adhesion promoter displaced preferably largely in the liquid state relative to the lamp body. The adhesion promoter is displaced on insertion of the light source into the base, for example. In this way, a means is produced which matches the contour of the circumferential surface of the lamp body against which it lies. The adhesion promoter thus not only achieves improved fastening of the lamp body to the base, for example, but also increases mechanical stability of the entire gas sensor. The adhesion promoter additionally exhibits the advantage that no drilling, screwing or similar method is needed to fasten the means to the base, for example. Thus, the material properties of the base are not negatively affected. In addition, the means produced using the adhesion promoter lies in sealing manner between the base and the lamp body and thus prevents dirt particles from penetrating between these components, for example. The adhesion promoter may also sheath electrical conductors to the light source and thus insulate them relative to the base.

According to another embodiment of the present invention, when solidified, the means constitutes a lampholder surrounding at least part of the circumference of the lamp body. Preferably, the lampholder surrounds the lamp body over the entire circumferential surface of the lower portion of the lamp body and extends over the bottom of the lamp body. The bottom of the lamp body should be understood to mean the outer side of the lamp body which is arranged facing the surface of the base. The part of the lampholder which lies against the circumferential surface of the lamp body preferably comprises an upper portion which is of a thicker or wider construction than the lower portion thereof. In this way, increased stability is achieved under vibration loads.

According to another embodiment of the present invention, the circumferential surface of the lampholder takes the form of an incline in contact with the base, preferably with the top of the same. The incline forms a type of widened support for the lamp body, which improves stability.

According to another embodiment of the present invention, the lampholder is formed between the inside of a base receptacle and the outside of a lamp body portion received in the base receptacle. The base receptacle is preferably a hole provided in the base, the depth of which is preferably no greater than the height of the lower lamp body portion, such that the radiation-emitting element is always positioned outside the base receptacle. Since the lampholder is constructed between the outside of said lamp body portion and the inside of the base receptacle, the lamp body is fixed in play-free and immobile manner relative to the base. The interplay between the base receptacle and the lampholder provides particularly high mechanical stability under vibration loading.

According to another embodiment of the present invention, a lampholder portion projecting beyond the open end of the base receptacle is inclined. The inclined portion preferably lies against the outer circumferential surface of the lamp body and against the surface of the base. The exterior of the inclined portion preferably falls away obliquely from the outer circumferential surface of the lamp body towards the surface of the base. In this way, a particularly effective support is formed for fixing the lamp body.

According to another embodiment, the lamp body and the base are bonded together, i.e. the means takes the form, for example, of an adhesion promoter applied in molten form and set. In this way, an effective bond is achieved without a negative effect on the material properties of the base and/or of the lamp body. The adhesion promoter may for example be heat-setting.

According to another embodiment, the means is an adhesive. If an adhesive is used, the means for play-free and immobile fixing of the lamp body may be produced cheaply. A further advantage of the adhesive is that it may be used effective for virtually all groups of material. Preferably, an adhesive is used which displays high surface adhesion.

According to another embodiment, the means and the base are of identical material. According to this embodiment, play-free and immobile fixing is brought about by the base portion formed in the immediate vicinity of the lamp body. Thus, for example, the material of the base may be locally melted and thus the existing material may be used.

Another embodiment of the present invention is characterised by a reflector associated with the detector and a means for play-free and immobile fixing of the detector. Play-free and immobile fixing of the detector at the focal point position of the reflector associated therewith makes it possible to further improve the measuring accuracy of the gas sensor. The means for play-free and immobile fixing of the detector may take the same form as the means for play-free and immobile fixing of the lamp body.

According to a further aspect of the present invention, a method is provided for producing a gas sensor, which is characterised by introduction of the light source with interposition of a liquid agent between the light source and the base and solidification of the liquid agent to form a means which is ultimately solid, whereby a lamp body of the light source is fixed in play-free and immobile manner in the solid means.

When introducing the light source, the agent is preferably provided at least between a bottom of the lamp body and a surface of the base opposite the bottom. The light source is thus introduced in such a way that at least the bottom of the lamp body is brought into contact with the liquid agent. Thus, on introduction, the agent is adapted simultaneously to the lamp body and the base surface, such that on completion of introduction, the agent comprises a form which matches the contour of the lamp body and base surface. As a result of subsequent solidification, a means for play-free and immobile fixing of the lamp body is simply produced. Since introduction of the lamp body simultaneously forms the means, gas sensors may be simply and quickly produced by the method. A separate method for producing the means is thus not necessary according to the invention.

According to an embodiment of the invention, the liquid agent is applied to the base. The liquid agent is applied, for example, to a portion of the surface of the base, the size of which corresponds to the surface area of the bottom of the lamp body. Alternatively, the liquid agent may be applied to a surface portion which is smaller in size than the surface area of the bottom of the lamp body. On introduction of the light source, the agent is in this case preferably displaced in such a way that it lies in an intermediate position at least against the entire surface of the bottom of the lamp body and the opposing surface of the base.

According to another embodiment, the lampholder is formed by introducing the light source into a material of the base which flows when heated. The base is heated, for example, by a heating unit in such a way that the heated base portion becomes liquid, wherein the light source is then introduced. According to a further embodiment, the material of the base is locally heated, i.e. only the base portion serving to receive the light source is heated.

Further embodiments of the method of the invention are indicated in the dependent method claims.

Further details, advantages and features of the present invention will become apparent from the following description of an exemplary embodiment together with the drawings, in which:
Fig. 1 is a schematic view of the structure of an exemplary embodiment of a gas sensor;
Fig. 2 is a sectional view of a light source introduced into a base; and
Figs. 3a and 3b show steps of an exemplary method for producing the gas sensor shown in Figures 1 and 2.

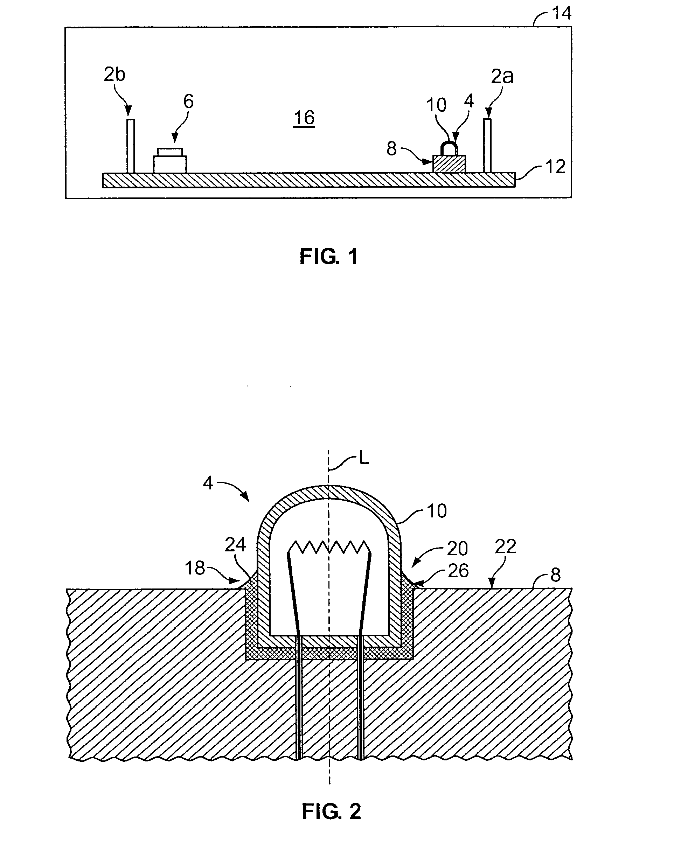

Fig. 1 shows a reflector 2a and a reflector 2b, which are associated, respectively, with an infrared light source 4 and an infrared detector 6. Both the light source 4 and the detector 6 are arranged at the focal point of the associated reflectors 2a, 2b. The light source 4 introduced into a base 8 comprises a lamp body 10. The reflectors 2a, 2b, the base 8 and the detector 6 are mounted on a printed circuit board 12, which is arranged in a gas sensor housing 14. The gas to be detected is introduced into this housing 14 preferably by forced flow. It should be pointed out that the arrangement of the detector 6 and the light source 4 is not restricted to the structure shown. Instead, the detector 6 and the light source 4 may also be arranged in parallel next to one another.

Fig. 2 shows a sectional view of the base 8 and the light source 4. Part of a lampholder 20 for play-free and immobile fixing of the lamp body 10 is formed between the inside of a base receptacle 18 and a lamp body portion received in this base receptacle 18. This lampholder 20 projects beyond the open end of the base receptacle 18 and lies against the lamp body 10 over the entire circumferential surface of a portion of the circumferential surface thereof. The part of the lampholder 20 which projects beyond the open end is formed as an inclined portion 24 between a surface 22 of the base 8 and the circumferential surface portion of the lamp body 10. The lampholder 20 lies imperviously against both the lamp body 10 and the inside of the base receptacle 18. The inclined portion 24 formed between the surface 22 of the base 8 and the circumferential surface of the lamp body 10 displays an obliquely extending exterior 26. In this way, an effective supporting portion is formed which, together with the part of the lampholder 20 formed in the base receptacle 18, effectively prevents deflection of the lamp body 10 transversely and lengthwise of the longitudinal axis L thereof under vibration loading.

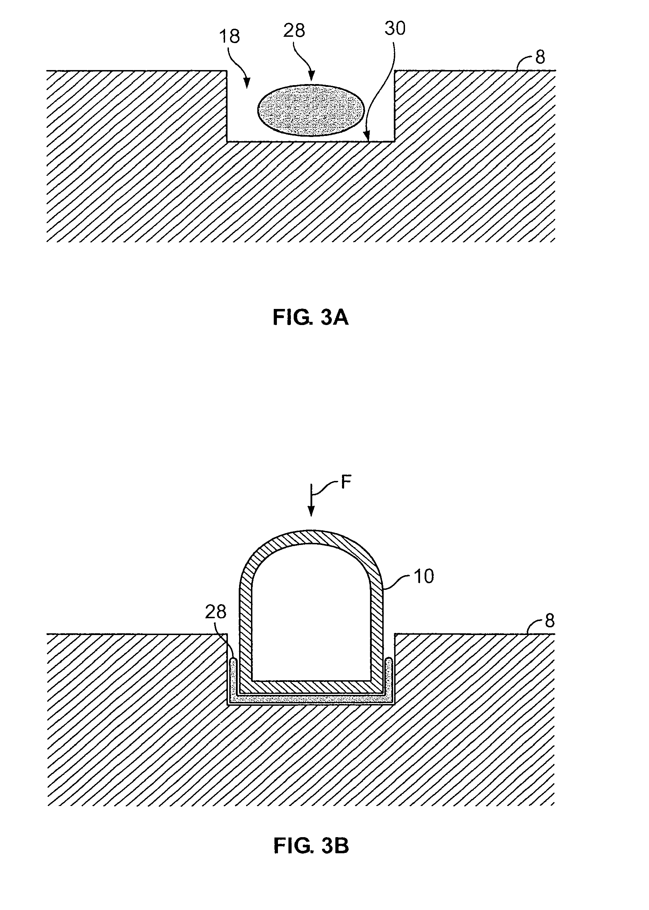

Fig. 3a and Fig. 3b show steps involved in an exemplary embodiment of a method for producing the gas sensor shown in Fig. 1 and Fig. 2 for mounting the light source 4 in the base 8.

Fig. 3a shows the base 8, which is in particular a so-called Surface Mounted Device (SMD) base. A liquid adhesive 28 has been introduced into the base receptacle 18 of the base 8 by a feed unit which is not shown. The adhesive 28 is introduced in such a way that it covers only a part of the bottom face 30 of the base receptacle 18. The quantity of adhesive 28 is so adjusted that the adhesive 28 extends when solidified as far as beyond the open end of the base receptacle 18.

Fig. 3b shows the step of introducing the light source 4. It should be pointed out that only the lamp body 10 of the light source 4 has been illustrated so as to simplify the illustration. The lamp body 10 is introduced into the base receptacle 18 under constant force in the direction of arrow F. On introduction, first of all, the bottom of the lamp body 10 comes into contact with the adhesive 28, which is displaced outwards thereby, i.e. towards the side wall of the base receptacle 18. When it reaches the side wall, the direction of flow of the adhesive 28 is diverted so as to flow into an annular gap formed between the lamp body 10 and the side wall, against gravity. The lamp body 10 is moved in the direction of arrow F, until the adhesive 28 is displaced beyond the open end of the base receptacle 18. Once the process of introducing the lamp body 10 is complete, the adhesive 28 solidifies. This process may, if desired, be accelerated by measures known to the person skilled in the art, e.g. heating an adhesive to achieve more rapid curing.

With the above-described method, a lampholder 20 like the one shown in Fig. 2 is produced. Since the adhesive 28 is displaced when liquid between the inner surface of the base receptacle 18 and the lamp body 10, the lampholder 20 obtained fits precisely and imperviously against the contour. In particular, the entire space between the lamp body 10 and the base receptacle 18 is filled with the adhesive 28. This effective lampholder 20 fixes the lamp body 10 at the focal point position and thus prevents play between the lamp body 10 and the base 8. In particular, the construction of the inclined portion 24 ensures very good mechanical stability. Thus, a gas sensor which is insensitive to shocks is provided by the method described.

## Claims

1. A gas sensor comprising:
a light source (4) introduced into a base (8),
a detector (6) detecting the intensity of the light source (4), and
a reflector (2a) associated with the light source (4),
**characterised by**
means (20) for play-free and immobile fixing of a lamp body (10) of the light source (4).

2. A gas sensor according to claim 1, **characterised in that** the means (20) is formed by solidification of an adhesion promoter displaced preferably largely in the liquid state relative to the lamp body (10).

3. A gas sensor according to claim 2, **characterised in that** the means (20), when solidified, constitutes a lampholder (20) surrounding at least part of the circumference of the lamp body (10).

4. A gas sensor according to claim 3, **characterised in that** the circumferential surface of the lampholder (20) takes the form of an incline in contact with the base (8).

5. A gas sensor according to claim 3, **characterised in that** the lampholder (20) is formed between the inside of a base receptacle (18) and the outside of a lamp body portion received in the base receptacle (18).

6. A gas sensor according to claim 5, **characterised in that** a lampholder portion (24) projecting beyond the open end of the base receptacle (18) is inclined.

7. A gas sensor according to any one of the preceding claims, **characterised in that** the lamp body (10) and the base (8) are bonded together.

8. A gas sensor according to any one of the preceding claims, **characterised in that** the means (20) is an adhesive.

9. A gas sensor according to any one of claims 1 to 7, **characterised in that** the means (20) and the base (8) are of identical material.

10. A gas sensor according to any one of the preceding claims, **characterised by** a reflector (2b) associated with the detector (10) and a means for play-free and immobile fixing of the detector (6).

11. A method for producing a gas sensor with a light source (4) introduced into a base (8), a detector (6) detecting the intensity of the light source (4) and a reflector (2a) associated with the light source (4),
**characterised by**
introduction of the light source (4) with interposition of a liquid agent (28) between the light source (4) and the base (8), and
solidification of the liquid agent (28) to form a means (20) which is ultimately solid, whereby a lamp body (10) of the light source (4) is fixed in play-free and immobile manner in the solid means (20).

12. A method according to claim 11, **characterised in that** the liquid agent (28) is applied to the base (8).

13. A method according to claim 11 or 12, **characterised in that**, on introduction, some of the liquid agent (28) is displaced and solidifies to form a lampholder (20) surrounding at least part of the circumference of the lamp body (10).

14. A method according to claim 11, 12 or 13, **characterised in that** the liquid agent (28) is introduced into a base receptacle (18) for receiving the light source (4) and some thereof is displaced in a gap between the base receptacle (18) and the lamp body (10) on introduction of the light source (4) into the base receptacle (18).

15. A method according to claim 14, **characterised in that** the liquid agent (28) is displaced beyond the edge of the open end of the base receptacle (18) onto the surface (22) of the base (8).

16. A method according to claim 15, **characterised in that** the agent (28) displaced beyond the edge is inclined.

17. A method according to any one of claims 11 to 16, **characterised in that** the lamp body (10) and the base (8) are bonded together.

18. A method according to any one of claims 13 to 17, **characterised in that** the lampholder (20) is formed by introducing the light source (4) into a material of the base (8) which flows when heated.

19. A method according to claim 18, **characterised in that** the material of the base (8) is heated locally.

20. A method according to any one of claims 11 to 17, **characterised in that** the light source (4) is inserted into an adhesive (28).
